Europäisches Patentamt

European Patent Office

Office européen des brevets

(11) Publication number: **0 124 121**
A2

(12) **EUROPEAN PATENT APPLICATION**

(21) Application number: 84104833.3

(22) Date of filing: 30.04.84

(51) Int. Cl.³: **B 23 Q 17/16, B 23 B 25/06**

(30) Priority: 02.05.83 US 490826

(71) Applicant: **PARKER HANNIFIN CORPORATION,** 17325 Euclid Avenue, Cleveland Ohio 44112 (US)

(43) Date of publication of application: 07.11.84 Bulletin 84/45

(72) Inventor: **Smrekar, Donald E., 762 Kennwood Drive, Gates Mills Ohio 44040 (US)**

(74) Representative: **Linser, Heinz, Patentanwälte Heinz Linser Dipl. Ing. Eckhardt Eyer Robert-Bosch-Strasse 12a Postfach 10 22 10, D-6072 Dreieich (DE)**

(84) Designated Contracting States: **DE FR GB**

(54) **Set-up method and gauges for turning machines.**

(57) A method and apparatus for setting the diameter and location of tooling in turning machines wherein a datum bushing 88 is used as a reference point for serially positioning a plurality of datum gauges 74-78 with the tooling for each machining position adjusted with respect to specific datum points, faces or surfaces on a respective gauge.

# BACKGROUND OF THE INVENTION

## Field of the Invention

The subject invention is directed to methods and apparatus for locating and adjusting tools in turning machines and, more particularly, for adjusting the location and diameter settings of cutting tools in multiple position, turning machines.

## Description of the Prior Art

Many types of machines have been developed for machining a workpiece into a part of selected shape and size by turning the workpiece with respect to one or more specially designed cutting tools. As the workpiece is turned, it is contacted by the tools to accomplish the machining necessary to produce the finished part. Examples of such turning machines are engine lathes, mills, automatic screw machines, vertical and horizontal index table machines, and turret lathes.

In most cases, many of the dimensions of a finished part are critical. To produce a part having dimensions within acceptable tolerances, the cutting tools must be positioned with an extremely high degree of accuracy. Sufficiently accurate positioning of the tools and toolholders for initial running of the part and in the event that one or more of the tools must be resharpened or replaced has been a persistent problem.

In the prior art, many devices and methods have been developed to aid in accurately setting the tools. In some cases, previously machined parts have been retained and used in setting up the tools for the next run. However, in the case of multiple-position machines, such pieces are not preserved for each tooling position of the machine and such partially machined pieces cannot be relocated in the machine in a precise and consistent manner such that they would be useful in setting up tooling. Moreover, this set-up procedure is simply not available for use in the initial run of the part.

In some types of prior apparatus, gauges for checking the position of the tools are attached directly to the workpiece when it is mounted in the machine. One example of such a gauge that is magnetically attached to the workpiece of a lathe is shown in U.S. Patent 804,067. In other instances, gauges have been attached to portions of the machine and the tools set for cutting diameter with respect thereto while the workpiece is mounted in the machine. For example, U.S. Patent 624,535 describes a gauge attached to the center pin that retains the workpiece in a lathe.

In other prior art devices, such as described in U.S. Patent 1,571,944, tools are preset with reference to the toolholder outside the machine. The entire toolholder assembly is then transferred to the machine toolslide for further adjustment on the machine. Similarly, U.S. Patent 3,402,473 describes a removable stop assembly that controls a switch actuating rod. To mount the tool, the tool and the stop assembly are placed in a set-up gauge wherein the stop assembly is adjusted in accordance with the position of the cutting tool. Both the stop assembly and the tool are then mounted in the machine.

In other devices known in the prior art, a gauge is inserted into the machine to calibrate the proper position of the cutting tool with respect to scales, inclinometers and the like. Examples are shown in U.S. Patent 2,504,249 for use on engine lathes; in U.S. Patent 2,556,067 for use in dressing grinding rocks; in U.S. Patent 2,657,470 for use in a boring machine; and in U.S. Patent 1,225,113 for use in a milling machine.

Unfortunately, the devices and methods discussed above have not been suitable for use on multiple position machines. Generally, they are intended for adjusting tools on lathes and similar turning machines and do not provide for setting tools with respect to both diameter and location nor do they provide for setting tools at different machining locations with respect to a common reference point.

Methods and apparatus known in the prior art for adjusting the location of tools in automatic or multiple-position machines have often employed the use of various types and styles of gauges. In some prior art devices, such as described in U.S. Patents 2,700,827; 4,290,206; 3,490,318; and 4,240,207, the tools are positioned by gauges that set the tool with respect to the toolholder. However, these devices require that the toolholder be precisely positioned in the machine. Since they describe or suggest no mechanism for positioning the toolholder, they do not overcome the problem of precisely positioning the tool with respect to the workpiece.

- 4 -                    0124121

Other prior art devices suggested for use in multiple position machines attempt to position the tools with respect to some part of the machine. For example, U.S. Patent 4,322,990 teaches a gauge for adjusting the tool position with respect to the spindle drum face of multiple spindle bar machines. Similarly, U.S. Patent 3,380,326 describes a toolholder with a gauge for positioning the toolholder with respect to its support. However, such methods provide no reference point that is common to the different machining positions. Thus, they are subject to error due to the variations in the relative position of the machine at the different machining positions. In the case of automatic or multiple-position machines, substantial trial and error has been required to correlate the machining occurring at different positions.

Prior art methods and apparatus for setting up multiple position automatic machines have been tedious and time-consuming. Typical set-up times range from twenty to thirty hours and, in some instances, are even longer. To set up the machine without damaging the machine or the tooling has generally required the talent of a skilled machinist. The cost including wages, machine downtime, and wasted material has been high. Moreover, the skilled machinists that the prior methods have relied on are not always available so that set up is delayed even further.

Accordingly, there was a need for a means of efficiently and accurately setting up tooling for multiple position automatic machines and for reducing the level of skill required to accomplish this task. Preferably, such an improvement would avoid the expense of specially adapted tools or toolholders and could be practiced without the machine being in operation to improve both efficiency and safety.

0124121

## SUMMARY OF THE INVENTION

In accordance with the subject invention, a method for setting tools in a multiple position turning machine includes the steps of inserting a datum bushing in the means for holding the workpiece and indexing the datum bushing and holding means to successive machining positions. At each machining position, a gauge corresponding to the respective position and designed with regard to the specific tools that are to be set is located and secured in the datum bushing. The tools are then set with respect to datum points on the gauge.

In locating the tools, it is preferred that the initial location of the machine holding means is the same as the initial machining position and the machine stock stop is set to the end position of the gauge.

Also preferably, the gauges are provided with datum faces that are located within specified tolerances of a locating face and datum surfaces that are located within specific tolerances of the central axis of the gauge. The datum bushing is provided with a reference face that cooperates with the locating faces on the gauges to provide a common reference for locating the gauges at the respective machining positions.

Other details, objects and advantages of the invention will become apparent as the following description of a presently preferred embodiment and a presently preferred method of practicing the invention proceeds.

## BRIEF DESCRIPTION OF THE DRAWINGS

The accompanying drawings illustrate a presently preferred apparatus and method for practicing the invention in which:

Figure 1 is a perspective view of the machining positions and the adjustable toolslides for mounting the machining tools in a typical, six-position automatic screw machine.

Figure 2 shows a typical part that is to be machined from bar stock in accordance with the subject invention.

Figure 3 shows a machine collet and datum bushing securing a gauge corresponding to the initial machining position of a six-position automatic screw machine;

Figures 4 through 8 show the collet and datum bushing of Figure 3 securing respective gauges for five subsequent machining positions.

## DESCRIPTION OF THE PREFERRED EMBODIMENT

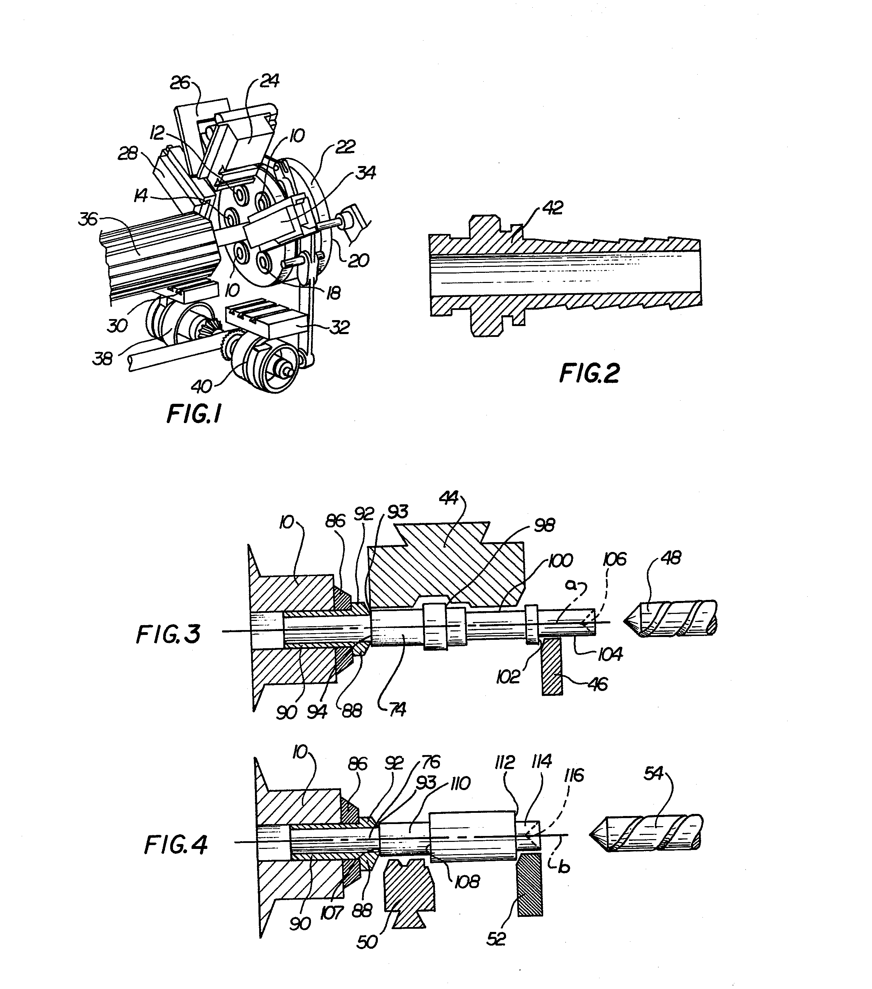

Figure 1 shows a perspective view of the machining positions and toolslides in a typical, commercially available six-position automatic screw machine that produces parts of selected shapes and sizes from lengths of various shaped bars. In Figure 1, six symmetrically arranged spindles 10-20 are located in a spindle carrier 22. The machine is provided with appropriate mechanical gearing and bearings such that spindles 10-20 are rotatably mounted within carrier 22. Also, carrier 22 is arranged such that it can be rotatably indexed in a step-wise manner such that the spindles are successively indexed to each of six machining positions. For each machining position, tools (not shown in Figure 1) are located in toolholders (not shown) that are mounted on toolslides 24-36. The position of toolslides 24-36 is determined by respective control means such as hydraulic or pneumatic actuators or mechanical devices such as cam controllers. For the particular example of the preferred embodiment, toolslides 24-36 are controlled by respective toolslide cams such as cams 38 and 40 such that, as the workpiece is turned, toolslides 24-34 follow the position of their respective cams and the tools mounted thereon are moved from an initial position into the workpiece in a controlled manner.

In the operation of the machine of Figure 1, the bars are fed into the machine through spindles 10-20 such that the ends are adjacent toolslides 24-34. On the opposite side of spindle carrier 22, the bars are supported in stock tubes (not shown). The bars are secured in respective spindles 10-20 by work holding means well known in the art such as collets, chucks, vises or other work holding fixtures. For the example of the preferred embodiment, the bars are secured by collets. Thus the bars are secured in spindles and the spindles rotatably maintained in spindle carrier 22 as spindle carrier 22 is indexed through the six machining positions. At each position, the bar stock in spindles 10-20 is rotated and appropriate tools form and shape the end of the bar as desired. In the last machining position, after the bar has been indexed through all six working positions, the finished part is cut off of the remaining length of stock. The collet is then opened and the bar is advanced by a prescribed length to contact the stock stop and the entire machining sequence is repeated. Thus, after spindle carrier 22 makes its first rotation, the machine continuously produces a finished part each time carrier 22 is indexed to a new position.

A preferred apparatus and method for setting tools in the screw machine of Figure 1 in accordance with the subject invention is described with respect to the specific part shown in Figure 2 and illustrated in Figures 3-8. Figure 2 shows a crimp nipple fitting 42 that is machined from a length of bar stock with the tools hereafter described with respect to Figures 3 through 8. Although a specific part is illustrated to better describe the subject invention, the scope of the invention is generally applicable and is not limited to the manufacture of any particular part.

In accordance with the subject invention, a set of gauges is designed, each gauge corresponding to a respective machining position. Specifically, each gauge is designed to provide datum surfaces or points having critical diameter and location dimensions with respect to a locating face and the central axis of the gauge. The datum surfaces or points are then used to set the tools that have been selected for the respective machining position.

In the design of the gauges, the part that is to be produced is first analyzed to determine what tools are required for its manufacture, the sequence in which they will be applied to the workpiece, and the orientation of the tools on the machine toolslide. These tooling and machining sequence selections are made in accordance with known principles of manufacturing engineering. Then, each individual gauge is designed with respect to the specific

selection and orientation of tools at the corresponding machining position to provide a face, diameter surface, point or edge that is maintained to critical tolerances with respect to a locating face or the central axis, thus serving as a datum surface or point for setting a corresponding tool. The surfaces of the gauge excepting the datum surfaces or points are not critical and need not be held to precise tolerances. The gauges are machined and are then ready for use in accordance with subject method as hereafter more fully explained with respect to Figures 3 through 8. The datum surface or point on the gauge then provides a precise reference for the location or diameter settings of one or more tools at the respective machining position.

Following the subject method for the specific example of the crimp nipple fitting 42 shown in Figure 2, the tools selected and shown in Figures 3 through 8 are rough form tool 44, knee turner 46 and spot drill 48 for position one; semi-finish form tool 50, knee-turner 52 and drill 54 for position two; finish barb tool 56, face tool 58, and drill 60 for position three; finish form front tool 62 and drill 64 for position four; finish form tool 66 and drill 68 for position five; and reamer 70, and cut-off tool 72 for position six.

The set of gauges developed for setting these tools are gauges 74-84 shown in Figures 3-8 respectively. The number of gauges in a particular set corresponds to the number of machining positions to which the work holding means is indexed. For the six position automatic screw machine illustrated in Figure 1, the six gauges 74-84 form a set. As shown in Figures 3-8, the exact shape of the gauges is determined by the particular tools and the

 0124121

sequence of machining steps that are selected to produce the end part. As is apparent from the gauges 74-84, the shape of a particular gauge does not necessarily correspond to or resemble the shape of the partially finished part after machining at the respective position. This is because the gauges are specifically designed and constructed to provide selected datum surfaces and points for adjusting the diameter and location settings of the tools at the corresponding machining position. The datum surfaces and points are precisely located with respect to a selected face surface and the longitudinal center axes of the gauge. The other surfaces and points of the gauges are non-critical and are not machined to close tolerances.

The use of gauges 74-84 in accordance with the subject method is hereafter more fully explained. As shown in Figure 3, collet 86 of spindle 10 is provided with a datum bushing 88 that is secured therein. As hereafter more fully explained, datum bushing 88 remains in collet 86 throughout the entire set-up method to provide a common reference for locating the tools at each machining position. Datum bushing 88 includes bushing portion 90 with a flange 92 located at one end thereof. Bushing 90 is positioned within collet 86 while the outer face 93 of flange 92 provides a reference surface for the location of gauges 74-84 as hereafter explained. Preferably, flange 92 is provided with a threaded tap and lug or other means for securing gauges lodged in the central bore of bushing 90 in accordance with the subject method.

To position rough form tool 44, knee turner 46, and spot drill 48 shown in Figure 3 in accordance with the subject method, collet 86 of the screw machine illustrated in Figure 1 is indexed to the initial machining position and the gauge 74, which has been designed for that position, is inserted into datum bushing 88. Gauge 74 is provided with a locating face 94 that is contacted with reference face 93 of datum bushing 88 to locate gauge 74 with respect to face 93 of datum bushing 88. Gauge 74 is then secured in datum bushing 88. Preferably, set-up of the machine is begun at the initial machining position so that the machine stock stop can be accurately adjusted with respect to datum bushing 88.

At the initial machining position, rough form tool 44, knee turner tool 46, and spot drill 48 are placed in respective toolholders and the toolholders are mounted on respective toolslides. The toolslide cams are then turned to their high point positions so that toolslides 24-36 are fully advanced. The respective tools are then adjusted to contact gauge 74 at the corresponding datum points.

For gauge 74, the datum faces, surfaces and points are face 98, diameter surface 100, face 102, diameter surface 104, and point 106. Face 98 and face 102 are located with respect to locating face 94; diameter surfaces 100 and 104 are located with respect to the central axis (a), and point 106 is located with respect to both locating face 94 and central axis (a).

As shown in the specific example of Figure 3, the location of rough form tool 44 is adjusted to face 98 and the diameter setting is adjusted to diameter surface 100. In the same manner, the location of knee turner tool 46 is adjusted to face 102 and the diameter setting to diameter surface 104. Finally the depth of spot drill 48 is adjusted to datum point 106 of gauge 74. When the tools

- 12 -    0124121

have been adjusted as described, the respective toolholders and toolslides are tightened and the toolslide cams turned from their high-point positions to cause the toolslides to retract. Gauge 74 is then loosened and removed from datum bushing 88 with datum bushing 88 remaining secured in collet 86 so that the location of reference face 93 with respect to spindle 10 and collet 86 is the same at the next machining position.

Figure 4 illustrates the next step according to the subject method, wherein the screw machine is indexed to the second machining position. Gauge 76 is then inserted and secured in datum bushing 88 with locating face 107 of gauge 76 in contact with reference face 93 of datum bushing 88. At the second position, semifinish tool 50, knee turner tool 52, and drill 54 are placed in respective toolholders and the toolholders mounted on respective toolslides. The toolslides are then advanced to their high point positions and the corresponding tools are set with respect to respective datum surfaces and points on gauge 76.

The datum faces, surfaces and points of gauge 76 are face 108, diameter surface 110, face 112, diameter surface 114, and datum point 116. Face 108 and face 112 are located with respect to face 107, diameter surfaces 110 and 114 are located with respect to the central axis (b); and datum point 116 is located with respect to both face 107 and central axis (b).

Specifically, the location of semifinish tool 50 is adjusted with respect to face 108 and the diameter setting with respect to diameter surface 110. The location of knee turner tool 52 is adjusted to face 112 and the diameter set to diameter surface 114. The depth of drill 54 is adjusted to datum point 116. When the tools have been adjusted with respect to the faces, points, and diameter surfaces that comprise the datum surfaces and points as described, the respective holders and slides are tightened and the toolslides are retracted from the advanced position. Gauge 76 is then loosened and removed from datum bushing 88 and collet 86 and datum bushing 88 are indexed to the third machining position.

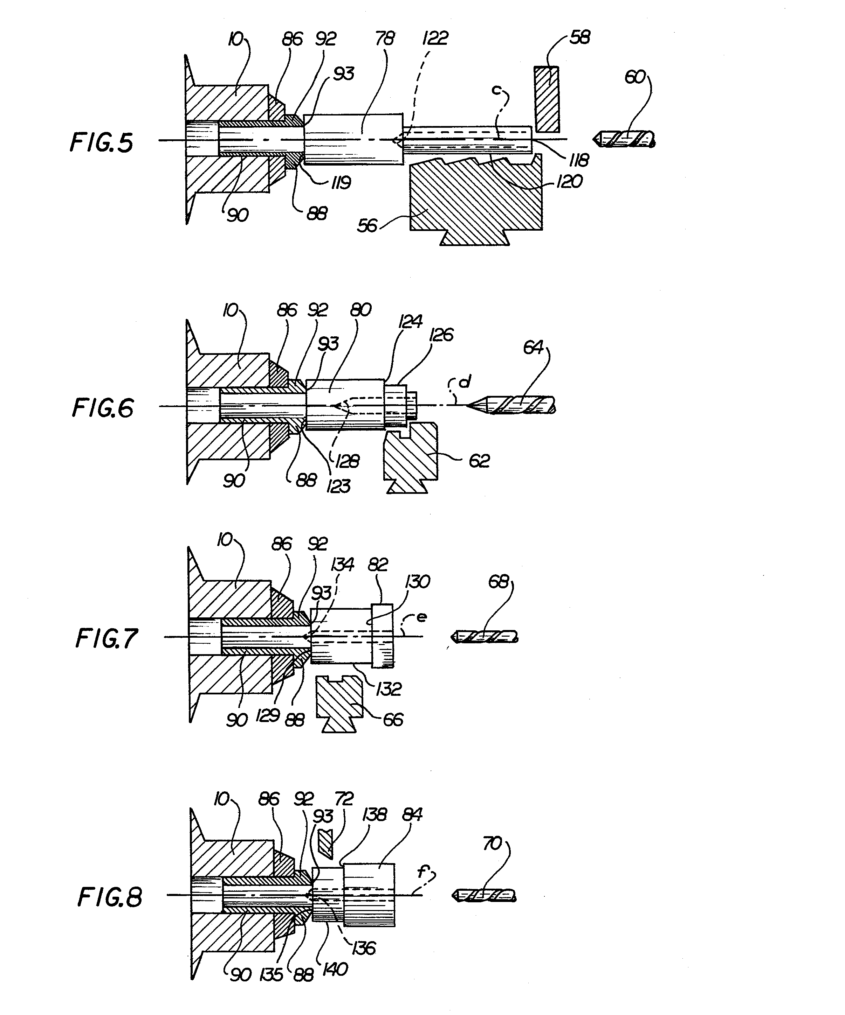

In the same manner as described with respect to Figures 3 and 4, the screw machine is successively indexed to machining positions three to six as shown in Figures 5 through 8 respectively. At the respective machining position, locating faces 119, 123, 129 and 135 of tools 78, 80, 82 and 84 respectively are contacted with reference face 93 of datum bushing 88 to locate the respective gauges. At each position the corresponding tools are placed in respective toolholders that are mounted on toolslides. The location and diameter setting of the tools at each machining position are then adjusted with respect to the datum points, faces and surfaces on gauges 78 through 84.

Specifically, as shown in Figure 5, the location and diameter setting of finish barb tool 56 are adjusted to face 118 and surface 120; the location of face tool 58 is adjusted to face 118; and drill 60 is adjusted to datum point 122. As shown in Figure 6, in the fourth machining position, the location and diameter setting of finish form front tool 62 are adjusted to face 124 and surface 126; and the depth of drill 64 is adjusted to datum point 128. As shown in Figure 7, in the fifth machining position, the location and diameter setting of finish form tool 66 are adjusted to face 130 and to surface 132; and drill 68 is

- 14 -

0124121

adjusted for depth to datum point 134. As shown in Figure 8, in the sixth machining position, the extension of reamer 70 is adjusted to datum point 136 and cut-off tool 72 is adjusted for location and diameter setting to face 138 and surface 140. At the sixth position, the cut-off tool 68 is further adjusted for the depth of the cut after gauge 84 has been removed from datum bushing 88.

After all the tools have been positioned with respect to gauges 74-84 as described above, datum bushing 88 is removed. The set-up is then complete and bar stock can be loaded into the machine and the machine run to produce the finished part 42. In some cases, it may be preferable to check the dimension of the machined part after a sample quantity of parts has been run. If necessary, further minor adjustments of the machine tools can be made with respect to variations from the specifications for the machined part.

Although the specific example of the preferred embodiment is described with regard to an automatic screw machine, it will be apparent to those skilled in the art that the invention is also applicable to other multiple position machine tools such as multispindle lathes, turret lathes, capstan lathes and indexing machines. While a presently preferred embodiment and method of practicing the invention has been illustrated herein, the invention is not limited thereto but can be otherwise variously embodied within the scope of the following claims.

CLAIMS

I claim:

1.    A method for positioning tools in multiple position turning machines having toolslides for mounting toolholders that maintain the tools, said method comprising the steps of:

inserting a datum bushing in the machine;

indexing the datum bushing to successive machining positions;

securing a gauge in the datum bushing at each of said machining positions, each of said gauges corresponding to the respective machining position; and

adjusting the tools at each of said positions to corresponding datum surfaces and points on the respective gauge.

2.    The method of claim 1 wherein the multiple position turning machine includes means for controlling the position of the toolslides, said indexing step including:

jogging the machine to the travel limit of the toolslide before adjusting the tools.

3.    The method of claims 1 or 2 wherein said adjusting step comprises:

placing the tools in the respective toolholders;

adjusting the cutting edge of the tools to the corresponding datum surfaces and points on the gauge; and

securing the tools within the toolholders and securing the toolholders on the toolslides.

4.    The method of claims 1 or 2 wherein said securing step comprises:

contacting a locating face of the gauge with a reference face of the datum bushing to locate the gauge.

5. The method of claims 1 or 2 and further comprising the step of:

removing the gauge from the datum bushing after adjustment of the tools at each of said machining positions.

6. A method for positioning tools in multiple position, turning machines wherein the workpiece is maintained in a work holding means, said method comprising:

inserting a datum bushing in said work holding means;

indexing the holding means to the initial machining position;

securing a gauge corresponding to the initial machining position in the datum bushing;

setting the machine stock stop to the end position of the gauge;

removing the gauge from the datum bushing;

indexing the machine to successive machining positions;

securing one of a plurality of gauges in the datum bushing at each machining position, each gauge corresponding to a respective machining position; and

adjusting the tools associated with each of said positions to respective datum surfaces and points on the corresponding gauge.

7. The method of claim 6 wherein said adjusting step comprises:

placing the tool in the toolholder;

placing the toolholder on the toolslide;

adjusting the cutting surface of the tool to a respective datum surface or point on the gauge; and

tightening the toolholder and toolslide.

8.    A method for positioning cutting tools in multiple position turning machines having movable toolslides for mounting holders that maintain the tools, said method comprising:

inserting a datum bushing in a work holding means that is successively indexed through a series of stations at which respective machining operations are performed,

indexing the work holding means to the initial machining position;

securing a gauge corresponding to the initial machining position in the datum bushing with the locating face of the gauge in contact with a reference face of the datum bushing;

setting the machine stock stop to the end face of the gauge;

jogging the machine to the travel limit of the toolslide;

mounting the tool in a holder, mounting the holder on a toolslide, and adjusting the tool with respect to at least one corresponding datum point on the gauge;

tightening the tool to the holder and the holder to the toolslide and moving the toolslide away from its travel limit position;

removing the gauge from the datum bushing and indexing the datum bushing to the subsequent machining position;

repeating the steps of securing, ·jogging, mounting, tightening, and removing at each successive machining station using the respective tools and gauges for that station; and

removing the datum bushing from the work holding means.

9.    A plurality of gauges for use in setting tools in multiple-position, turning machines wherein the workpiece is maintained in a work holding means, each of said gauges comprising:

a locating face;

at least one datum face having a precise axial location with respect to said locating face; and

at least one datum surface having a precise radial location with respect to the central axis of said gauge.

10.    The gauges of claim 9 wherein at least one of said gauges further comprises:

a datum point having a precise axial location with respect to said locating face and a precise radial location with respect to the central axis.

11.    The gauges of claim 9 or 10 further comprising a datum bushing, said datum bushing having:

a bushing portion adapted to be secured in the work holding means; and

a flange connected to one end of said bushing portion, said flange having a reference face adapted for contact with the locating faces of said gauges to provide a common reference location for each of said gauges.

FIG.1

FIG.2

FIG.3

FIG.4

FIG.5

FIG.6

FIG.7

FIG.8